# EUROPEAN PATENT APPLICATION

(11) **EP 4 645 963 A1**
(43) Date of publication of application: **05.11.2025**
(21) Application number: 23910312.0
(22) Date of filing: 21.12.2023
(51) Int. Cl.: H04W 52/02

(54) **SIGNAL DETECTION RESULT PROCESSING METHOD AND APPARATUS, AND TERMINAL**

(30) Priority: 28.12.2022 CN 202211697551
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Lavoix
(86) International application number: PCT/CN2023/140472
(87) International publication number: WO 2024/140383

(57) **Abstract**

This application discloses a method and an apparatus for processing a signal detection result and a terminal, and pertains to the field of communication technologies. The method for processing a signal detection result in embodiments of this application includes: detecting, by a terminal, a target signal; and performing, by the terminal, an operation in a case that a detection result of the target signal meets a preset condition, where the performing an operation includes at least one of the following: performing a non-low-power communication operation; stopping a low-power communication operation; and reporting first information, where the first information is used to indicate at least one of the following: the detection result meets the preset condition, the terminal performs a non-low-power communication operation, and the terminal stops a low-power communication operation.

## Description

### CROSS-REFERENCE TO RELATED APPLICATIONS

This application claims priority to Chinese Patent Application No. 202211697551.9, filed in China on December 28, 2022, which is incorporated herein by reference in its entirety.

### TECHNICAL FIELD

This application pertains to the field of communication technologies, and specifically relates to a method and an apparatus for processing a signal detection result, and a terminal.

### BACKGROUND

In some communication systems, a low-power mechanism is introduced. In a low-power mode, a low-power wake-up signal (Low Power Wake Up Signal, LP-WUS) may be monitored, or a low-power wake-up module (which may also be referred to as a low-power wake-up receiver, Low Power Wake Up Receiver, LP-WUR) may be enabled or activated, where the LP-WUR is a module or a receiver associated with the LP-WUS. Currently, a terminal performs a low-power-related communication operation based on pre-configuration, which causes relatively poor flexibility of a communication operation of the terminal.

### SUMMARY

Embodiments of this application provide a method and an apparatus for processing a signal detection result and a terminal, which can resolve a problem of relatively poor flexibility of a communication operation of the terminal.

According to a first aspect, a method for processing a signal detection result is provided, including:
detecting, by a terminal, a target signal; and
performing, by the terminal, an operation in a case that a detection result of the target signal meets a preset condition, where the performing an operation includes at least one of the following:
   performing a non-low-power communication operation;
   stopping a low-power communication operation; and
reporting first information, where the first information is used to indicate at least one of the following: the detection result meets the preset condition, the terminal performs a non-low-power communication operation, and the terminal stops a low-power communication operation.

According to a second aspect, an apparatus for processing a signal detection result is provided, including:
a detection module, configured to detect a target signal; and
an execution module, configured to perform an operation in a case that a detection result of the target signal meets a preset condition, where the performing an operation includes at least one of the following:
   performing a non-low-power communication operation;
   stopping a low-power communication operation; and
   reporting first information, where the first information is used to indicate at least one of the following: the detection result meets the preset condition, a terminal performs a non-low-power communication operation, and the terminal stops a low-power communication operation.

According to a third aspect, a terminal is provided. The terminal includes a processor and a memory, the memory stores a program or instructions capable of running on the processor, and when the program or the instructions are executed by the processor, the steps of the method for processing a signal detection result provided in the embodiments of this application are implemented.

According to a fourth aspect, a terminal is provided, including a processor and a communication interface. The communication interface is configured to detect a target signal. The processor is configured to perform an operation in a case that a detection result of the target signal meets a preset condition, where the performing an operation includes at least one of the following: performing a non-low-power communication operation; stopping a low-power communication operation; and reporting first information, where the first information is used to indicate at least one of the following: the detection result meets the preset condition, the terminal performs a non-low-power communication operation, and the terminal stops a low-power communication operation.

According to a fifth aspect, a readable storage medium is provided. The readable storage medium stores a program or instructions, and when the program or the instructions are executed by a processor, the steps of the method for processing a signal detection result provided in the embodiments of this application are implemented.

According to a sixth aspect, a chip is provided. The chip includes a processor and a communication interface, the communication interface is coupled to the processor, and the processor is configured to run a program or instructions to implement the method for processing a signal detection result provided in the embodiments of this application.

According to a seventh aspect, a computer program/program product is provided. The computer program/program product is stored in a storage medium, and the computer program/program product is executed by at least one processor to implement the steps of the method for processing a signal detection result provided in the embodiments of this application.

In the embodiments of this application, a terminal detects a target signal, and the terminal performs an operation in a case that a detection result of the target signal meets a preset condition. The performing an operation includes at least one of the following: performing a non-low-power communication operation; stopping a low-power communication operation; and reporting first information, where the first information is used to indicate at least one of the following: the detection result meets the preset condition, the terminal performs a non-low-power communication operation, and the terminal stops a low-power communication operation. In this way, the foregoing operation may be performed based on the detection result of the target signal, thereby improving flexibility of a communication operation of the terminal.

### BRIEF DESCRIPTION OF DRAWINGS

FIG. 1 is a block diagram of a wireless communication system applicable to an embodiment of this application;
FIG. 2 is a schematic diagram of a structure of a terminal applicable to an embodiment of this application;
FIG. 3 is a schematic diagram of a structure of a signal applicable to an embodiment of this application;
FIG. 4 is a flowchart of a method for processing a signal detection result according to an embodiment of this application;
FIG. 5 is a structural diagram of an apparatus for processing a signal detection result according to an embodiment of this application;
FIG. 6 is a structural diagram of a communication device according to an embodiment of this application; and
FIG. 7 is a structural diagram of another terminal according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that, terms used in this way may be interchangeable under appropriate circumstances, so that the embodiments of this application can be implemented in an order other than that illustrated or described herein. Moreover, the terms "first" and "second" typically distinguish between objects of one category rather than limiting a quantity of objects. For example, a first object may be one object or a plurality of objects. In addition, in the specification and claims, "and/or" represents at least one of connected objects, and the character "/" generally represents an "or" relationship between associated objects.

The term "indication" in the specification and claims of this application may be an explicit indication, or may be an implicit indication. The explicit indication may be understood as follows: A transmitter explicitly notifies, in a transmitted indication, a receiver of an operation that needs to be performed or a requested result. The implicit indication may be understood as follows: The receiver performs determining based on the indication transmitted by the transmitter, and determines, based on a determining result, the operation that needs to be performed or the requested result.

It should be noted that, a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" are often used interchangeably in the embodiments of this application. A technology described may be used for the systems and radio technologies described above, as well as other systems and radio technologies. A new radio (New Radio, NR) system is described below for illustrative purposes, and NR terms are used in most of the following descriptions. However, these technologies are also applicable to applications such as a 6^{th} generation (6^{th} Generation, 6G) communication system other than NR system applications.

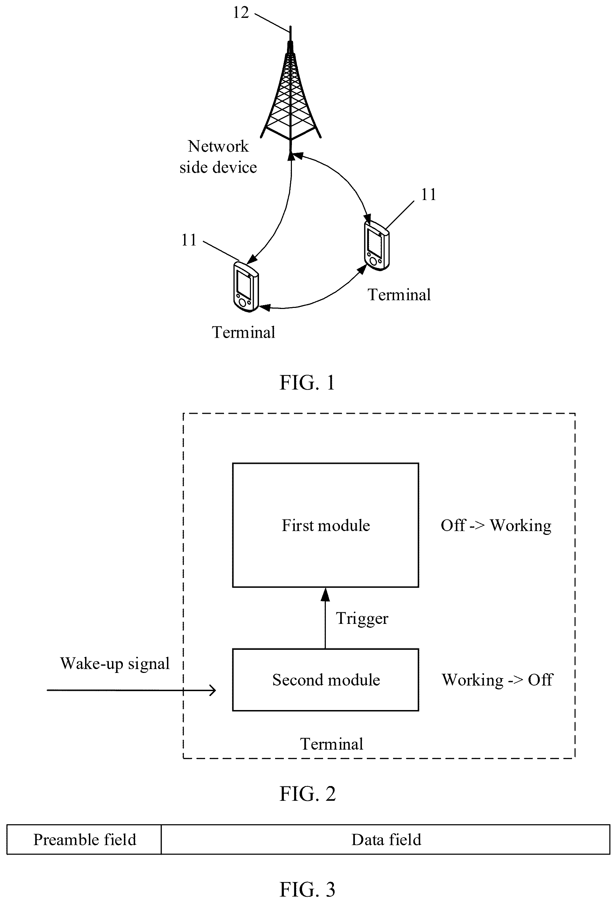

FIG. 1 is a block diagram of a wireless communication system applicable to an embodiment of this application. The wireless communication system includes a terminal 11 and a network side device 12. The terminal 11 may be a terminal side device such as a mobile phone, a tablet personal computer (Tablet Personal Computer), a laptop computer (Laptop Computer) that is alternatively referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a laundry machine, or a furniture), a gaming console, a personal computer (personal computer, PC), a teller machine, or a self-service machine. The wearable device includes: a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in this embodiment of this application. The network side device 12 may include an access network device or a core network device. The access network device may also be referred to as a wireless access network device, a radio access network (Radio Access Network, RAN), a radio access network function, or a radio access network unit. The access network device may include a base station, a wireless local area network (Wireless Local Area Networks, WLAN) access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. Provided that same technical effects are achieved, the base station is not limited to a specific technical term. It should be noted that in embodiments of this application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

In some embodiments, an LP-WUS may be received by an LP-WUR and is used to wake up a main radio communication module and the like. As shown in FIG. 3, the terminal includes two modules. A first module is a main radio communication module, and is configured to send and receive mobile communication data. A second module is a low-power wake-up receiving module, and is configured to receive a low-power wake-up signal and a low-power beacon signal that are sent by a transmit end. The low-power wake-up signal may be used to wake up a main radio communication module at a receive end, and the low-power beacon signal may be used to provide time reference information and other information for receiving of the low-power wake-up signal, and may further provide wake-up chain management.

As shown in FIG. 2, when the first module is not waked up by the second module, the first module is always in a disabled state, and does not send or receive data; and when downlink data arrives, the second module detects a wake-up signal sent by the transmit end, and the wake-up signal includes information about this terminal, the second module triggers the first module to switch from the disabled state to a working state, so as to receive and send data. The second module may be continuously enabled or discontinuously enabled. When the second module is enabled, the second module may receive the low-power wake-up signal and the low-power beacon signal.

In some embodiments, a basic framework of the LP-WUS may be shown in FIG. 3, and includes:
a preamble field (Preamble field) and a data field (Data field).

Functions of the preamble field include but are not limited to at least one of the following: detection of the LP-WUS, synchronization, and determining of a data rate (data rate). In addition, a preamble (preamble) may be further used to indicate a user identifier, a user group identifier, or the like. The data field may be used to carry a data part. In addition, the data field may also include at least one of the following:
a user identifier or a user group identifier, a specific bit for waking up the terminal, a bit that carries another function such as system information update, an emergency message, a random access channel (Random Access Channel, RACH), and information about an operation performed after the terminal is waked up, where the information about the operation performed after the terminal is waked up may be: whether a synchronization signal block (Synchronization Signal Block, SSB) needs to be received, whether cell selection or reselection needs to be performed, and whether system information needs to be received.

In addition, a beacon (Beacon) signal is similar to this, and may also include a preamble and a data part.

A method and an apparatus for processing a signal detection result and a terminal provided in embodiments of this application are described in detail below with reference to the accompanying drawing by using some embodiments and application scenarios thereof.

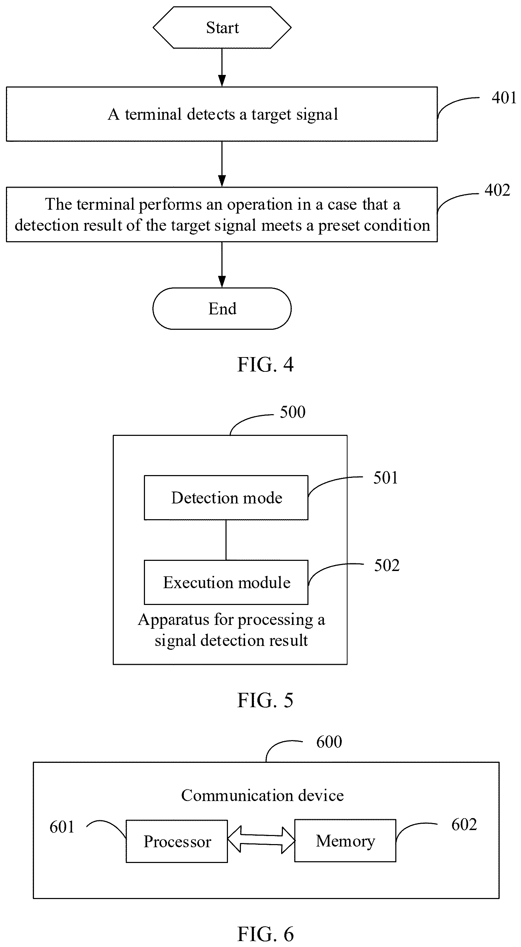

Referring to FIG. 4, FIG. 4 is a flowchart of a method for processing a signal detection result according to an embodiment of this application. As shown in FIG. 4, the method includes the following steps:

Step 401: A terminal detects a target signal.

The target signal may be a signal delivered by a network side.

The target signal may be a signal agreed upon in a protocol, or may be a signal indicated by the network side.

Step 402: The terminal performs an operation in a case that a detection result of the target signal meets a preset condition, where the performing an operation includes at least one of the following:
performing a non-low-power communication operation;
stopping a low-power communication operation; and
reporting first information, where the first information is used to indicate at least one of the following: the detection result meets the preset condition, the terminal performs a non-low-power communication operation, and the terminal stops a low-power communication operation.

The preset condition may be a condition agreed upon in a protocol or configured by the network side.

The non-low-power communication operation may be a communication operation in a non-low-power mode or a communication operation for entering a non-low-power mode, and the low-power communication operation may be a communication operation in a low-power mode or a communication operation for entering a low-power mode.

The reporting first information may be: reporting the first information to the network side.

In this embodiment of this application, the foregoing operation may be performed based on the detection result of the target signal by using the foregoing steps, thereby improving flexibility of a communication operation of the terminal. In addition, the preset condition may be further used to make the terminal flexibly applicable to different scenarios. For example, the foregoing operation is performed in a scenario in which the preset condition is met, and another communication operation is performed in a scenario in which the preset condition is not met, to reduce power consumption of the terminal as much as possible while ensuring mobile performance or a service delay of the terminal.

In an optional implementation, the target signal includes at least one of the following:
a first signal, where a signal type of the first signal is associated with one of the following: a low-power wake-up signal LP-WUS and a beacon signal (which may be referred to as a beacon for short);
a second signal, where the second signal is a signal different from the first signal; and
a third signal corresponding to a cell, an area, or a tracking area (Tracking area, TA).

The signal type of the first signal includes at least one of the following:
an LP-WUS, a part of an LP-WUS, a beacon signal, and a part of a beacon signal.

In some implementations, the LP-WUS may include a preamble (preamble) and data (data), and a part of the LP-WUS may be a preamble part or a data part.

The beacon signal may include a preamble (preamble) and data (data), and a part of the beacon signal may be a preamble part or a data part.

The signal type of the first signal includes an LP-WUS, a part of an LP-WUS, a beacon signal, and a part of a beacon signal. Therefore, the terminal may perform the foregoing operation based on more signals, to improve compatibility of the terminal. In addition, through a part of the LP-WUS and a part of the beacon signal, the terminal may need to detect only a part of the signal, thereby saving functions of the terminal.

In some implementations, the first signal includes at least one sequence in the signal type. For example, the first signal may be one or more sequences in the signal type.

In the foregoing implementation, the foregoing operation may be performed based on at least one of the first signal, the second signal, and the third signal, so that the foregoing operation is more flexibly performed, and therefore, the terminal flexibly supports low-power communication in more scenarios.

In some implementations, the second signal and the first signal are different signals of a same signal type. For example, the second signal is another signal or a plurality of other signals of a same type as the first signal. For example, both the first signal and the second signal are LP-WUSs or beacon signals, but have different sequences.

Because the second signal and the first signal belong to a same signal type, the terminal detects signals of a same type, thereby reducing detection complexity.

It should be noted that, in this embodiment of this application, in some implementations, the second signal and the first signal may be signals of different types.

In some implementations, the beacon signal may be used to determine at least one of the following:
whether the terminal is in a sleep state;
whether the terminal is in an awake state;
whether the terminal enters a low-power mode;
whether the terminal exits a low-power mode;
at least one of the operations is performed;
whether to update a cell, an area, or a TA; and
whether the terminal is within coverage of the LP-WUS.

Whether the terminal is in a sleep state may be: whether the terminal enters or continues to remain in a sleep state. Whether the terminal is in an awake state may be: whether the terminal enters or continues to remain in an awake state, for example, whether the terminal is waked up.

In this embodiment, whether the terminal continues to sleep or is waked up or performs at least one of the foregoing operations may be determined through detection of the beacon signal. For example, if the signal is detected, the terminal continues to stay in a low-power sleep (LP-Sleep) state, or if the signal fails to be detected, the terminal is waked up, exits the LP-sleep state, or performs at least one of the foregoing operations.

Whether the terminal updates a cell, an area, or a TA may be further determined through detection of the beacon signal. For example, if the signal is detected, the terminal does not update the cell, the area, or the TA; or if the signal fails to be detected, the terminal updates the cell, the area, or the TA.

Whether the terminal is within coverage of a wake-up signal may be further determined through detection of the beacon signal. For example, if the signal is detected, the terminal may be within the coverage of the wake-up signal, that is, the terminal may be waked up by using the wake-up signal; or if the signal fails to be detected, the terminal is not within the coverage of the wake-up signal, that is, the terminal cannot be waked up by using the wake-up signal.

In this implementation, in addition to implementing the foregoing functions by using the beacon signal, the terminal may further perform the foregoing operation based on the beacon signal. In this way, no additional signal needs to be introduced, to reduce complexity of the terminal. Further, the foregoing operation may be performed in a case that the first signal is detected, to prevent continuously performing a low-power operation by the terminal from affecting performance of the terminal.

In some implementations, the area includes at least one of the following:
an access network notification area (Ran notification area, RNA), a group of cells, an area corresponding to a TRP, an area corresponding to a group of TRPs, a distributed unit (Distributed Unit, DU) range, a centralized unit (Centralized Unit, CU) range, and a preset area range.

The foregoing third signal is a signal corresponding to the foregoing cell, area, or TA, and a correspondence between a cell, an area, or a TA and a signal may be configured by the network side or agreed upon in a protocol.

In some implementations, the cell, the area, or the TA corresponding to the terminal includes at least one of the following:
a cell, an area, or a TA on which the terminal camps;
a cell, an area, or a TA stored in the terminal;
a cell, an area, or a TA in which the terminal is located when entering the LP sleep state;
a cell, an area, or a TA in which the terminal is located before entering an LP sleep state; and
a cell, an area, or a TA configured by a network for the terminal.

In this implementation, whether to perform the foregoing operation may be determined based on the signal corresponding to the cell, the area, or the TA.

That the detection result meets the preset condition may indicate that the detection result that is of the first signal and that is obtained by the terminal does not meet the preset condition, or the first signal fails to be detected, or a signal other than the first signal is detected.

In an optional implementation, that the detection result meets a preset condition includes at least one of the following:
the first signal fails to be detected;
it is detected that strength of the first signal is lower than a first preset threshold;
the second signal is detected;
it is detected that strength of the second signal is higher than a second preset threshold;
the second signal is detected, and the second signal indicates the terminal to perform the operation; and
the third signal is detected, and a cell, an area, or a TA corresponding to the third signal is not a cell, an area, or a TA corresponding to the terminal.

That the first signal fails to be detected may be that the terminal cannot detect the first signal.

In some implementations, the strength includes at least one of the following:
reference signal received power (Reference Signal Received Power, RSRP), reference signal received quality (Reference Signal Received Quality, RSRQ), a signal to interference plus noise ratio (Signal to Interference plus Noise Ratio, SINR), a receive level value, signal strength, and a preset measurement quantity.

The preset measurement quantity may be another newly defined measurement quantity other than the foregoing measurement performance.

In this embodiment of this application, a preset threshold may be agreed upon in a protocol or configured by the network side. In addition, the foregoing plurality of preset thresholds may be the same or different.

In this implementation, the foregoing operation may be performed in at least one of the foregoing cases, so that the terminal can stop the low-power communication operation in a timely manner, or perform the non-low-power communication operation in a timely manner, to improve communication performance of the terminal and prevent the terminal from missing some communication messages.

In an optional implementation, the performing a non-low-power communication operation includes at least one of the following:
waking up or enabling a main radio or a main radio module;
receiving system information;
tracking area update;
cell selection or reselection;
public land mobile network (Public Land Mobile Network, PLMN) selection or reselection;
entering an idle state or an inactive state;
monitoring a physical downlink control channel (Physical Downlink Control Channel, PDCCH) by using a main radio or a main radio module, where the PDCCH may be a PDCCH corresponding to a paging message or a PDCCH corresponding to another message; and
monitoring an LP-WUS by using a main radio or a main radio module.

The main radio module may be a main radio communication module.

In this implementation, through the non-low-power communication operation, a corresponding operation may be performed in the preset condition, to improve communication performance of the terminal. For example, in a relatively mobile scenario, mobile performance of the terminal can be effectively ensured while power consumption of the terminal is reduced.

In an optional implementation, the stopping a low-power communication operation includes at least one of the following:
disabling a low-power wake-up module or a low-power receiver;
deactivating or disabling an LP-WUS function;
exiting a low-power sleep state; and
skipping or ignoring the LP-WUS.

In this implementation, through stopping of the low-power communication operation, a low-power related operation may be stopped in the preset condition, so that the terminal performs another communication operation, to improve communication performance of the terminal.

In an optional implementation, the method further includes:
receiving, by the terminal, second information, where the second information is used to indicate to perform the operation in a case that the detection result meets the preset condition.

The second information may be information delivered by the network side.

In this implementation, the terminal may perform the operation based on the second information in a case that the detection result meets the preset condition. For example, the network side controls the terminal to perform behavior when the terminal fails to detect the first signal, which is applicable to different scenarios flexibly. For example, in a scenario in which the terminal is relatively fixed, power consumption of the terminal can be effectively reduced, and in a scenario in which the terminal is relatively mobile, mobile performance of the terminal can be effectively ensured while power consumption of the terminal is reduced.

The second information may explicitly indicate to perform the operation in a case that the detection result meets the preset condition, or the second information explicitly indicates the terminal to specifically perform one or more of the following operations based on the detection result: performing the non-low-power communication operation, stopping the low-power communication operation, and reporting the first information.

Alternatively, the second information may implicitly indicate to perform the operation in a case that the detection result meets the preset condition. In addition, the second information may be another message that is different from a configuration message of the target signal, or may be a configuration message of the target signal, and is used to configure sequence-related information of the target signal.

In some implementations, the second information may be used to indicate at least one of the following:
performing all the operations in a case that the detection result meets the preset condition; and
performing a part of the operations in a case that the detection result meets the preset condition.

A part of the foregoing operations may be one or more operations. For example, one of the operations is performed in a case that the detection result meets the preset condition.

The second information may indicate, by using one bit, to perform all the operations in a case that the detection result meets the preset condition; or
the second information may indicate, by using one bit or a plurality of bits, to perform a part of the operations in a case that the detection result meets the preset condition.

In some implementations, in a case that the second information indicates to perform one or a part of the operations, a part of the operations that are not indicated by the second information are agreed upon in a protocol or pre-configured. In this way, signal overheads can be reduced.

For example, the second information indicates to perform at least one of the foregoing operations if the terminal cannot detect the first signal. Specifically, one bit (bit) is used to indicate that the foregoing operation is performed if the terminal cannot detect the first signal; or one bit is used to indicate whether the foregoing operation is performed if the terminal cannot detect the first signal.

For another example, the second information indicates one of the foregoing operations in a case that the terminal cannot detect the first signal. Specifically, one bit or a plurality of bits are used to indicate a specific operation that is specifically performed if the terminal cannot detect the first signal.

For another example, the second information indicates one or more operations in a case that the terminal cannot detect the first signal. Specifically, some operations are indicated by using one bit, and other operations are agreed upon in a protocol; or specifically, a plurality of operations are indicated by using a plurality of bits, and other operations are agreed upon in a protocol.

In an optional implementation, the performing, by the terminal, an operation includes:
performing, by the terminal, the operation after or within first preset time.

The first preset time may be agreed upon in a protocol or configured by the network side.

In this implementation, the foregoing operation may be performed after or within the first preset time if the detection result of the target signal is met. In this way, the terminal and the network side may have consistent understanding for time of performing the operation by the terminal, and because the operation is performed after the first preset time, the terminal may make preparations in advance, for example, making preparations for waking up the main radio communication module or the main radio, thereby improving and ensuring service performance, for example, ensuring that a communication latency and the like are not affected.

Specifically, if the detection result of the target signal meets the preset condition (for example, the first signal cannot be detected), at least one of the following operations is performed:
waking up or enabling the main radio/main radio module, and further, waking up or enabling the main radio/main radio module after preset time;
receiving system information, which further includes at least one of the following: receiving the system information by using the main radio/main radio module, and receiving the system information after preset time;
tracking area update (Tracking area update, TAU), which further includes at least one of the following: performing TAU by using the main radio/main radio module, and performing TAU after preset time;
cell selection or reselection, which further includes at least one of the following: performing cell selection or reselection by using the main radio/main radio module, and performing cell selection or reselection after preset time;
PLMN selection or reselection, which further includes at least one of the following: performing PLMN selection or reselection by using the main radio/main radio module, and performing PLMN selection or reselection after preset time;
entering an idle state or an inactive state, and further, entering an idle state or an inactive state after preset time;
monitoring a PDCCH by using the main radio/main radio module, and further, monitoring a PDCCH by using the main radio/main radio module after preset time;
disabling an LP-WUR receiver/receiving module, and further, disabling an LP-WUR receiver/receiving module after preset time;
deactivating or disabling an LP-WUS function (LP-WUS disable), and further, deactivating or disabling an LP-WUS function (LP-WUS disable) after preset time;
exiting an LP-sleep state, and further, exiting an LP-sleep state after preset time;
skipping or ignoring the LP-WUS (Skip LP-WUS), and further, skipping or ignoring an LP-WUS (Skip LP-WUS) after preset time; and
reporting, by the terminal, the first information to the network side, or further, reporting, by the terminal, the first information to the network side after preset time.

In an optional implementation, the detection result includes at least one of the following:
a detection result within second preset time; and
a detection result corresponding to a preset quantity of detection times.

The second preset time may include at least one of the following:
preset time configured by the network;
preset time agreed upon in the protocol; and
a preset quantity of periods of the first signal, where the signal type of the first signal is associated with one of the following: an LP-WUS and a beacon.

The detection result within the second preset time may indicate a detection result obtained by detecting the target signal within the second preset time.

The preset quantity of periods of the first signal may be a quantity of periods of the first signal that is agreed upon in a protocol or configured by the network side, that is, a quantity of periods that is agreed upon in a protocol or configured by the network side, and whether to perform the foregoing operation is determined based on a detection result in the quantity of periods.

The preset quantity of detection times may be a quantity of detection times agreed upon in a protocol or configured by the network side, such as a quantity of blind detections.

In an optional implementation, the performing a non-low-power communication operation includes:
performing a communication operation by using the main radio or the main radio module.

The performing a communication operation by using the main radio or the main radio module may include at least one of the following:
waking up or enabling the main radio/main radio module;
receiving system information by using the main radio/main radio module;
performing TAU by using the main radio/main radio module;
performing cell selection or reselection by using the main radio/main radio module;
performing PLMN selection or reselection by using the main radio/main radio module;
monitoring a PDCCH by using the main radio/main radio module; and
reporting the first information to the network side by using the main radio/main radio module.

In this implementation, the non-low-power communication operation may be performed by using the main radio or the main radio module. In this way, a high performance characteristic of the main radio or the main radio module is used to improve communication performance of the terminal.

In an optional implementation, that the detection result of the target signal meets the preset condition includes:
a detection result of the target signal within third preset time meets the preset condition.

The third preset time may be agreed upon in a protocol or configured by the network side.

That the detection result of the target signal in the third preset time meets the preset condition may be that a detection result obtained in the third preset time meets the preset condition.

Because the foregoing operation is performed when the detection result of the target signal within the third preset time meets the preset condition, flexibility of a communication operation of the terminal can be improved, to limit a scenario in which the terminal performs the foregoing operation.

In some implementations, the first information may indicate at least one of the following:
the terminal cannot detect the first signal, or the terminal cannot detect the first signal within preset time;
the terminal wakes up or enables the main radio/main radio module, and further, wakes up or enables the main radio/main radio module after preset time;
the terminal receives system information, which further includes at least one of the following: the terminal receives the system information by using the main radio/main radio module, and the terminal receives the system information after preset time;
the terminal performs tracking area update (Tracking area update, TAU), which further includes at least one of the following: the terminal performs TAU by using the main radio/main radio module, and the terminal performs TAU after preset time;
the terminal performs cell selection or reselection, which further includes at least one of the following: the terminal performs cell selection or reselection by using the main radio/main radio module, and the terminal performs cell selection or reselection after preset time;
the terminal performs PLMN selection or reselection, which further includes at least one of the following: the terminal performs PLMN selection or reselection by using the main radio/main radio module, and the terminal performs PLMN selection or reselection after preset time;
the terminal enters an idle state or an inactive state, and further, enters an idle state or an inactive state after preset time;
the terminal monitors a PDCCH by using the main radio/main radio module, and further monitors a PDCCH by using the main radio/main radio module after preset time;
the terminal disables an LP-WUR receiver/receiving module, and further disables an LP-WUR receiver/receiving module after preset time;
the terminal deactivates or disables an LP-WUS function (LP-WUS disable), and further deactivates or disables an LP-WUS function (LP-WUS disable) after preset time;
the terminal exits an LP-sleep state, or further exits an LP-sleep state after preset time; and
the terminal skips or ignores an LP-WUS (Skip LP-WUS), and further skips or ignores an LP-WUS (Skip LP-WUS) after preset time.

By using the first information, the network side may be aware, in a timely manner, of an operation performed by the terminal, so that the network side and the terminal have consistent understanding for the operation performed by the terminal, thereby improving performance of communication between the terminal and a network side device.

In this embodiment of this application, a terminal detects a target signal, and the terminal performs an operation in a case that a detection result of the target signal meets a preset condition. The performing an operation includes at least one of the following: performing a non-low-power communication operation; stopping a low-power communication operation; and reporting first information, where the first information is used to indicate at least one of the following: the detection result meets the preset condition, the terminal performs a non-low-power communication operation, and the terminal stops a low-power communication operation. In this way, the foregoing operation may be performed based on the detection result of the target signal, thereby improving flexibility of a communication operation of the terminal.

The method for processing a signal detection result provided in the embodiments of this application may be performed by a virtual apparatus. In the embodiments of this application, an apparatus for processing a signal detection result provided in the embodiments of this application is described by using an example in which a virtual apparatus performs the method for processing a signal detection result.

Referring to FIG. 5, FIG. 5 is a structural diagram of an apparatus for processing a signal detection result according to an embodiment of this application. As shown in FIG. 5, the apparatus 500 for processing a signal detection result includes:
a detection module 501, configured to detect a target signal; and
an execution module 502, configured to perform an operation in a case that a detection result of the target signal meets a preset condition, where the performing an operation includes at least one of the following:
   performing a non-low-power communication operation;
   stopping a low-power communication operation; and
   reporting first information, where the first information is used to indicate at least one of the following: the detection result meets the preset condition, the terminal performs a non-low-power communication operation, and the terminal stops a low-power communication operation.

Optionally, the target signal includes at least one of the following:
a first signal, where a signal type of the first signal is associated with one of the following: a low-power wake-up signal LP-WUS and a beacon signal;
a second signal, where the second signal is a signal different from the first signal; and
a third signal corresponding to a cell, an area, or a tracking area TA.

Optionally, the signal type of the first signal includes at least one of the following:
an LP-WUS, a part of an LP-WUS, a beacon signal, and a part of a beacon signal.

Optionally, the first signal includes at least one sequence in the signal type.

Optionally, the beacon signal is used to determine at least one of the following:
whether the terminal is in a sleep state;
whether the terminal is in an awake state;
whether the terminal enters a low-power mode;
whether the terminal exits a low-power mode;
at least one of the operations is performed;
whether to update a cell, an area, or a TA; and
whether the terminal is within coverage of the LP-WUS.

Optionally, the second signal and the first signal are different signals of a same signal type.

Optionally, that the detection result meets a preset condition includes at least one of the following:
the first signal fails to be detected;
it is detected that strength of the first signal is lower than a first preset threshold;
the second signal is detected;
it is detected that strength of the second signal is higher than a second preset threshold;
the second signal is detected, and the second signal indicates the terminal to perform the operation; and
the third signal is detected, and a cell, an area, or a TA corresponding to the third signal is not a cell, an area, or a TA corresponding to the terminal.

Optionally, the strength includes at least one of the following:
reference signal received power RSRP, reference signal received quality RSRQ, a signal to interference plus noise ratio SINR, a receive level value, signal strength, and a preset measurement quantity.

Optionally, the area includes at least one of the following:
an access network notification area RNA, a group of cells, an area corresponding to a transmitting receiving point TRP, an area corresponding to a group of TRPs, a distributed unit DU range, a centralized unit CU range, and a preset area range.

Optionally, the cell, the area, or the TA corresponding to the terminal includes at least one of the following:
a cell, an area, or a TA on which the terminal camps;
a cell, an area, or a TA stored in the terminal;
a cell, an area, or a TA in which the terminal is located when entering a low-power LP sleep state;
a cell, an area, or a TA in which the terminal is located before entering an LP sleep state; and
a cell, an area, or a TA configured by a network for the terminal.

Optionally, the performing a non-low-power communication operation includes at least one of the following:
waking up or enabling a main radio or a main radio module;
receiving system information;
tracking area update;
cell selection or reselection;
public land mobile network PLMN selection or reselection;
entering an idle state or an inactive state;
monitoring a physical downlink control channel PDCCH by using a main radio or a main radio module; and
monitoring an LP-WUS by using a main radio or a main radio module.

Optionally, the stopping a low-power communication operation includes at least one of the following:
disabling a low-power wake-up module or a low-power receiver;
deactivating or disabling an LP-WUS function;
exiting a low-power sleep state; and
skipping or ignoring the LP-WUS.

Optionally, the apparatus further includes:
a receiving module, configured to receive second information, where the second information is used to indicate to perform the operation in a case that the detection result meets the preset condition.

Optionally, the second information is used to indicate at least one of the following:
performing all the operations in a case that the detection result meets the preset condition; and
performing a part of the operations in a case that the detection result meets the preset condition.

Optionally, the second information may indicate, by using one bit, to perform all the operations in a case that the detection result meets the preset condition; or
the second information indicates, by using one bit or a plurality of bits, to perform a part of the operations in a case that the detection result meets the preset condition.

Optionally, in a case that the second information indicates to perform one or a part of the operations, a part of the operations that are not indicated by the second information are agreed upon in a protocol or pre-configured.

Optionally, that the terminal performs an operation includes:
performing, by the terminal, the operation after or within first preset time.

Optionally, the detection result includes at least one of the following:
a detection result within second preset time; and
a detection result corresponding to a preset quantity of detection times.

Optionally, the second preset time includes at least one of the following:
preset time configured by the network;
preset time agreed upon in the protocol; and
a preset quantity of periods of the first signal, where the signal type of the first signal is associated with one of the following: an LP-WUS and a beacon signal.

Optionally, the performing a non-low-power communication operation includes:
performing a communication operation by using the main radio or the main radio module.

Optionally, that the detection result of the target signal meets the preset condition includes:
a detection result of the target signal within third preset time meets the preset condition.

The foregoing apparatus for processing a signal detection result can improve flexibility of a communication operation of the terminal.

The apparatus for processing a signal detection result in this embodiment of this application may be an electronic device, for example, an electronic device with an operating system, or may be a component such as an integrated circuit or a chip in an electronic device. For example, the electronic device may be a terminal, or may be another device other than a terminal. For example, the terminal may include but is not limited to the foregoing listed types of terminals in the embodiments of this application. The another device may be a server, a network attached storage (Network Attached Storage, NAS), or the like. This is not specifically limited in this embodiment of this application.

The apparatus for processing a signal detection result provided in this embodiment of this application can implement processes implemented in the method embodiment shown in FIG. 4, and achieve a same technical effect. To avoid repetition, details are not described herein again.

Optionally, as shown in FIG. 6, an embodiment of this application further provides a communication device 600, including a processor 601 and a memory 602. The memory 602 stores a program or instructions capable of running on the processor 601. For example, when the communication device 600 is a terminal, the program or the instructions are executed by the processor 601 to implement the steps in the foregoing embodiment of the method for processing a signal detection result, and a same technical effect can be achieved. To avoid repetition, details are not described herein again.

An embodiment of this application further provides a communication device, including a processor and a communication interface. The processor is configured to perform an operation in a preset condition, where the operation includes at least one of the following: an operation associated with a low-power wake-up signal LP-WUS; disabling a main radio or a main radio module; and stopping receiving a signal by using a main radio or a main radio module. This communication device embodiment is corresponding to the foregoing embodiment of the method for processing a signal detection result. Each implementation process and implementation of the foregoing method embodiment may be applicable to this communication device embodiment, and a same technical effect can be achieved.

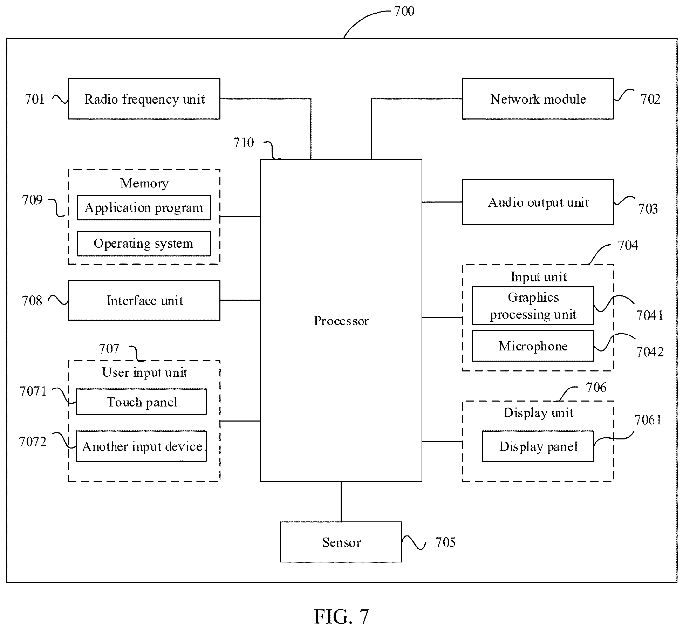

Specifically, FIG. 7 is a schematic diagram of a hardware structure of a terminal for implementing an embodiment of this application.

The terminal 700 includes but is not limited to at least some of the following components: a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (for example, a battery) that supplies power to each component. The power supply may be logically connected to the processor 710 by using a power management system, to implement functions such as charging management, discharging management, and power consumption management through the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 or another input device 7072. The touch panel 7071 is also referred to as a touchscreen. The touch panel 7071 may include two parts: a touch detection apparatus and a touch controller. The another input device 7072 may include but is not limited to a physical keyboard, a function key (such as a volume control key or an on/off key), a trackball, a mouse, and an operating lever. Details are not described herein again.

In this embodiment of this application, after receiving downlink data from a network side device, the radio frequency unit 701 may transmit the downlink data to the processor 710 for processing. In addition, the radio frequency unit 701 may send uplink data to a network side device. Generally, the radio frequency unit 701 includes but is not limited to an antenna, an amplifier, a transceiver, a coupler, a low-noise amplifier, a duplexer, and the like.

The memory 709 may be configured to store a software program or instructions and various types of data. The memory 709 may mainly include a first storage area for storing a program or instructions and a second storage area for storing data. The first storage area may store an operating system, an application program or instructions required by at least one function (for example, a sound play function or an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes but is not limited to these memories and any other suitable type of memory.

The processor 710 may include one or more processing units. Optionally, the processor 710 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 710.

The radio frequency unit 701 is configured to detect a target signal.

The processor 710 is configured to perform an operation in a case that a detection result of the target signal meets a preset condition, where the performing an operation includes at least one of the following:
performing a non-low-power communication operation;
stopping a low-power communication operation; and
reporting first information, where the first information is used to indicate at least one of the following: the detection result meets the preset condition, the terminal performs a non-low-power communication operation, and the terminal stops a low-power communication operation.

Optionally, the target signal includes at least one of the following:
a first signal, where a signal type of the first signal is associated with one of the following: a low-power wake-up signal LP-WUS and a beacon signal;
a second signal, where the second signal is a signal different from the first signal; and
a third signal corresponding to a cell, an area, or a tracking area TA.

Optionally, the signal type of the first signal includes at least one of the following:
an LP-WUS, a part of an LP-WUS, a beacon signal, and a part of a beacon signal.

Optionally, the first signal includes at least one sequence in the signal type.

Optionally, the beacon signal is used to determine at least one of the following:
whether the terminal is in a sleep state;
whether the terminal is in a awake state;
whether the terminal enters a low-power mode;
whether the terminal exits a low-power mode;
at least one of the operations is performed;
whether to update a cell, an area, or a TA; and
whether the terminal is within coverage of the LP-WUS.

Optionally, the second signal and the first signal are different signals of a same signal type.

Optionally, that the detection result meets a preset condition includes at least one of the following:
the first signal fails to be detected;
it is detected that strength of the first signal is lower than a first preset threshold;
the second signal is detected;
it is detected that strength of the second signal is higher than a second preset threshold;
the second signal is detected, and the second signal indicates the terminal to perform the operation; and
the third signal is detected, and a cell, an area, or a TA corresponding to the third signal is not a cell, an area, or a TA corresponding to the terminal.

Optionally, the strength includes at least one of the following:
reference signal received power RSRP, reference signal received quality RSRQ, a signal to interference plus noise ratio SINR, a receive level value, signal strength, and a preset measurement quantity.

Optionally, the area includes at least one of the following:
an access network notification area RNA, a group of cells, an area corresponding to a transmitting receiving point TRP, an area corresponding to a group of TRPs, a distributed unit DU range, a centralized unit CU range, and a preset area range.

Optionally, the cell, the area, or the TA corresponding to the terminal includes at least one of the following:
a cell, an area, or a TA on which the terminal camps;
a cell, an area, or a TA stored in the terminal;
a cell, an area, or a TA in which the terminal is located when entering a low-power LP sleep state;
a cell, an area, or a TA in which the terminal is located before entering an LP sleep state; and
a cell, an area, or a TA configured by a network for the terminal.

Optionally, the performing a non-low-power communication operation includes at least one of the following:
waking up or enabling a main radio or a main radio module;
receiving system information;
tracking area update;
cell selection or reselection;
public land mobile network PLMN selection or reselection;
entering an idle state or an inactive state;
monitoring a physical downlink control channel PDCCH by using a main radio or a main radio module; and
monitoring an LP-WUS by using a main radio or a main radio module.

Optionally, the stopping a low-power communication operation includes at least one of the following:
disabling a low-power wake-up module or a low-power receiver;
deactivating or disabling an LP-WUS function;
exiting a low-power sleep state; and
skipping or ignoring the LP-WUS.

Optionally, the radio frequency unit 701 is further configured to:
receive second information, where the second information is used to indicate to perform the operation in a case that the detection result meets the preset condition.

Optionally, the second information is used to indicate at least one of the following:
performing all the operations in a case that the detection result meets the preset condition; and
performing a part of the operations in a case that the detection result meets the preset condition.

Optionally, the second information may indicate, by using one bit, to perform all the operations in a case that the detection result meets the preset condition; or
the second information indicates, by using one bit or a plurality of bits, to perform a part of the operations in a case that the detection result meets the preset condition.

Optionally, in a case that the second information indicates to perform one or a part of the operations, a part of the operations that are not indicated by the second information are agreed upon in a protocol or pre-configured.

Optionally, that the terminal performs an operation includes:
performing, by the terminal, the operation after or within first preset time.

Optionally, the detection result includes at least one of the following:
a detection result within second preset time; and
a detection result corresponding to a preset quantity of detection times.

Optionally, the second preset time includes at least one of the following:
preset time configured by the network;
preset time agreed upon in the protocol; and
a preset quantity of periods of the first signal, where the signal type of the first signal is associated with one of the following: an LP-WUS and a beacon signal.

Optionally, the performing a non-low-power communication operation includes:
performing a communication operation by using the main radio or the main radio module.

Optionally, that the detection result of the target signal meets the preset condition includes:
a detection result of the target signal within third preset time meets the preset condition.

The foregoing terminal can improve flexibility of a communication operation of the terminal.

An embodiment of this application further provides a readable storage medium. The readable storage medium stores a program or instructions, and the program or the instructions are executed by a processor to implement the steps of the method for processing a signal detection result provided in the embodiments of this application.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions to implement the processes of the foregoing embodiment of the method for processing a signal detection result, and a same technical effect can be achieved. To avoid repetition, details are not described herein again.

It should be understood that, the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement the processes of the foregoing embodiment of the method for processing a signal detection result, and a same technical effect can be achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by software and a necessary general-purpose hardware platform, or certainly may be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for processing a signal detection result, comprising:
detecting, by a terminal, a target signal; and
performing, by the terminal, an operation in a case that a detection result of the target signal meets a preset condition, wherein the performing an operation comprises at least one of the following:
performing a non-low-power communication operation;
stopping a low-power communication operation; and
reporting first information, wherein the first information is used to indicate at least one of the following: the detection result meets the preset condition, the terminal performs a non-low-power communication operation, and the terminal stops a low-power communication operation.

2. The method according to claim 1, wherein the target signal comprises at least one of the following:
a first signal, wherein a signal type of the first signal is associated with one of the following: a low-power wake-up signal LP-WUS and a beacon signal;
a second signal, wherein the second signal is a signal different from the first signal; and
a third signal corresponding to a cell, an area, or a tracking area TA.

3. The method according to claim 2, wherein the signal type of the first signal comprises at least one of the following:
an LP-WUS, a part of an LP-WUS, a beacon signal, and a part of a beacon signal.

4. The method according to claim 2, wherein the first signal comprises at least one sequence in the signal type.

5. The method according to claim 2, wherein the beacon signal is used to determine at least one of the following:
whether the terminal is in a sleep state;
whether the terminal is in an awake state;
whether the terminal enters a low-power mode;
whether the terminal exits a low-power mode;
at least one of the operations is performed;
whether to update a cell, an area, or a TA; and
whether the terminal is within coverage of the LP-WUS.

6. The method according to claim 2, wherein the second signal and the first signal are different signals of a same signal type.

7. The method according to any one of claims 2 to 6, wherein that the detection result meets the preset condition comprises at least one of the following:
the first signal fails to be detected;
it is detected that strength of the first signal is lower than a first preset threshold;
the second signal is detected;
it is detected that strength of the second signal is higher than a second preset threshold;
the second signal is detected, and the second signal indicates the terminal to perform the operation; and
the third signal is detected, and a cell, an area, or a TA corresponding to the third signal is not a cell, an area, or a TA corresponding to the terminal.

8. The method according to claim 7, wherein the strength comprises at least one of the following:
reference signal received power RSRP, reference signal received quality RSRQ, a signal to interference plus noise ratio SINR, a receive level value, signal strength, and a preset measurement quantity.

9. The method according to claim 2, wherein the area comprises at least one of the following:
an access network notification area RNA, a group of cells, an area corresponding to a transmitting receiving point TRP, an area corresponding to a group of TRPs, a distributed unit DU range, a centralized unit CU range, and a preset area range.

10. The method according to claim 7, wherein the cell, the area, or the TA corresponding to the terminal comprises at least one of the following:
a cell, an area, or a TA on which the terminal camps;
a cell, an area, or a TA stored in the terminal;
a cell, an area, or a TA in which the terminal is located when entering a low-power LP sleep state;
a cell, an area, or a TA in which the terminal is located before entering an LP sleep state; and
a cell, an area, or a TA configured by a network for the terminal.

11. The method according to any one of claims 1 to 10, wherein the performing a non-low-power communication operation comprises at least one of the following:
waking up or enabling a main radio receiver or a main radio module;
receiving system information;
tracking area update;
cell selection or reselection;
public land mobile network PLMN selection or reselection;
entering an idle state or an inactive state;
monitoring a physical downlink control channel PDCCH by using a main radio or a main radio module; and
monitoring an LP-WUS by using a main radio or a main radio module.

12. The method according to any one of claims 1 to 11, wherein the stopping a low-power communication operation comprises at least one of the following:
disabling a low-power wake-up module or a low-power receiver;
deactivating or disabling an LP-WUS function;
exiting a low-power sleep state; and
skipping or ignoring the LP-WUS.

13. The method according to any one of claims 1 to 12, wherein the method further comprises:
receiving, by the terminal, second information, wherein the second information is used to indicate to perform the operation in a case that the detection result meets the preset condition.

14. The method according to claim 13, wherein the second information is used to indicate at least one of the following:
performing all the operations in a case that the detection result meets the preset condition; and
performing a part of the operations in a case that the detection result meets the preset condition.

15. The method according to claim 14, wherein the second information indicates, by using one bit, to perform all the operations in a case that the detection result meets the preset condition; or
the second information indicates, by using one bit or a plurality of bits, to perform a part of the operations in a case that the detection result meets the preset condition.

16. The method according to claim 14, wherein in a case that the second information indicates to perform one or a part of the operations, a part of the operations that are not indicated by the second information are agreed upon in a protocol or pre-configured.

17. The method according to any one of claims 1 to 16, wherein the performing, by the terminal, an operation comprises:
performing, by the terminal, the operation after or within first preset time.

18. The method according to any one of claims 1 to 17, wherein the detection result comprises at least one of the following:
a detection result within second preset time; and
a detection result corresponding to a preset quantity of detection times.

19. The method according to claim 18, wherein the second preset time comprises at least one of the following:
preset time configured by the network;
preset time agreed upon in the protocol; and
a preset quantity of periods of the first signal, wherein the signal type of the first signal is associated with one of the following: an LP-WUS and a beacon signal.

20. The method according to any one of claims 1 to 19, wherein the performing a non-low-power communication operation comprises:
performing a communication operation by using the main radio or the main radio module.

21. The method according to any one of claims 1 to 20, wherein that the detection result of the target signal meets the preset condition comprises:
a detection result of the target signal within third preset time meets the preset condition.

22. An apparatus for processing a signal detection result, comprising:
a detection module, configured to detect a target signal; and
an execution module, configured to perform an operation in a case that a detection result of the target signal meets a preset condition, wherein the performing an operation comprises at least one of the following:
performing a non-low-power communication operation;
stopping a low-power communication operation; and
reporting first information, wherein the first information is used to indicate at least one of the following: the detection result meets the preset condition, a terminal performs a non-low-power communication operation, and the terminal stops a low-power communication operation.

23. A terminal, comprising a processor and a memory, wherein the memory stores a program or instructions capable of running on the processor, and when the program or the instructions are executed by the processor, the steps of the method for processing a signal detection result according to any one of claims 1 to 21 are implemented.

24. A readable storage medium, wherein the readable storage medium stores a program or instructions, and when the program or the instructions are executed by a processor, the steps of the method for processing a signal detection result according to any one of claims 1 to 21 are implemented.

25. A chip, wherein the chip comprises a processor and a communication interface, the communication interface is coupled to the processor, and the processor is configured to run a program or instructions to implement the steps of the method for processing a signal detection result according to any one of claims 1 to 21.
